# EUROPEAN PATENT APPLICATION

(11) **EP 0 694 835 A1**
(43) Date of publication of application: **31.01.1996**
(21) Application number: 95305028.3
(22) Date of filing: 19.07.1995
(51) Int. Cl.: G06F 9/44

(54) **Integrated software command specification and documentation system**

(30) Priority: 29.07.1994 US 282862
(71) Applicant: AT&T Corp., New York, NY 10013-2412 (US)
(72) Inventor: Cuka, David A., Bolingbrook, Illinois 60440 (US); Weiss, David Mandel, Batavia, Illinois 60510 (US)
(74) Representative: Watts, Christopher Malcolm Kelway, Dr.

(57) **Abstract**

An integrated software command specification and documentation system is disclosed. The user documentation for a given input command or output report may be automatically generated by placing documentation information directly in the software specification that defines the command or report. A list of documentation keywords and associated rules are utilized to identify and process the documentation information. A compiler will utilize the documentation keywords to recognize the documentation information in the command specification and place the documentation information in an appropriate segment of a documentation file associated with the command or report. Documentation information that may be needed for a plurality of command specifications, such as parameter definitions for parameters associated with a plurality of commands, may be stored in a documentation library.

## Description

### FIELD OF THE INVENTION

The present invention relates to a system for documenting software, and more particularly, to a method and apparatus for automatically generating user documentation for software commands and output reports from documentation information that has been placed directly in a software specification.

### BACKGROUND OF THE INVENTION

While software may be the medium for communicating with a computing system, it is the accompanying documentation that will explain the operation of that software to those who wish to use it. Accordingly, the importance of clear and accurate documentation cannot be overemphasized. In order to effectively utilize a particular software program or command, the documentation accompanying that software should clearly set forth the purpose of the software and provide a detailed description of the input data and any output results, such as reports and displays, that are produced by the software.

Because of the frequency with which many software programs are updated, programmers typically find it to be quite burdensome to keep the accompanying documentation up to date. Nonetheless, it is critical that the documentation is properly revised with each software update so that the documentation may accurately reflect the operation of the software at all times.

Unfortunately, with conventional programming techniques, a programmer will typically develop or modify a software program in a programming environment, and then the programmer or a third party must utilize a separate environment, such as a text editor, to develop or modify the accompanying documentation. Accordingly, changes that are made in the software do not promptly, accurately and invariably appear in the accompanying documentation.

One existing software documentation system, described in U.S. Patent No. 4,860,203 and hereinafter referred to as the "Corrigan" system, allows design documentation information for a software program to be placed directly in a high level language source code program for extraction by a compiler. The extracted documentation information is sequentially placed by the compiler in a separate design documentation file. In addition, the Corrigan software documentation system includes a mechanism to ensure that every implementation code statement of the software program has at least one associated design comment describing the code operation.

While the Corrigan software documentation system provides an effective mechanism for extracting documentation information from a source code file, the extracted documentation information may not be reorganized by the compiler in any manner. The Corrigan software documentation system utilizes a single documentation indicator, i.e., an exclamation mark, to identify documentation statements in the source code program. Accordingly, the extracted documentation information cannot be classified or reorganized in any manner and must be placed in a single design documentation file in the order in which it was extracted from the source code program.

As is apparent from the above deficiencies with conventional documentation systems, a need exists for an improved documentation management system that is integrated in a single environment with the programming tools and allows extracted documentation information to be processed or reorganized. An integrated programming and documentation system will make it easier for programmers to write consistent and complete documentation, and will thereby facilitate the maintenance of accurate documentation.

### SUMMARY OF THE INVENTION

Generally, according to one aspect of the invention, the documentation for a particular input command or output report may be automatically generated by placing documentation information directly in the software specification that defines the command or report.

The invention includes a method for generating user documentation for a software command to be executed by a computing system. The computing system will interpret the software command based on a high level language command specification that includes command specification information identified by one or more command keywords. The high level language command specification is translated into a form that may be executed by the computing system and the user documentation includes a plurality of segments. The documentation method comprises the steps of: defining a plurality of documentation keywords for identifying documentation information statements in the command specification that describe the operation of the software command, each of the documentation keywords being associated with one of the segments of the user documentation; incorporating into the high level language command specification one or more of the documentation information statements, wherein each of the documentation information statements are identified in the command specification by one of the predefined documentation keywords; parsing the high level language command specification; extracting from the parsed command specification each of the documentation information statements identified by one of the predefined documentation keywords; and placing each of the extracted documentation information statements in the segment of the user documentation corresponding to the associated documentation keyword.

In addition, the invention includes an apparatus for generating user documentation for a software command to be executed by a computing system. The computing system interprets the software command based on a high level language command specification that includes command specification information identified by one or more command keywords. The high level language command specification is translated into a form that may be executed by the computing system. The documentation apparatus comprises: a documentation keyword data base for storing a plurality of documentation keywords for identifying documentation information statements in the command specification that describe the operation of the software command, each of the documentation keywords having an associated rule to be performed upon recognition of the associated documentation keyword in the command specification; means for incorporating into the high level language command specification one or more of the documentation information statements, wherein each of the documentation information statements are identified in the command specification by one of the predefined documentation keywords; a parser for parsing the high level language command specification; and processor means for extracting from the parsed command specification each of the documentation information statements identified by one of the predefined documentation keywords and for processing each of the extracted documentation information statements based on the rule associated with the documentation keyword identifying the documentation information statement.

A more complete understanding of the present invention, as well as further features and advantages of the invention, will be obtained by reference to the detailed description and drawings.

### BRIEF DESCRIPTION OF THE DRAWINGS

FIG. 1 is a schematic block diagram illustrating an integrated software command specification and documentation system according to the present invention;
FIGS. 2a through 2d, collectively, illustrate a sample command specification source code file that provides specification and documentation information for an input command and associated output report;
FIGS. 3a through 3e, collectively, are a flow chart describing an exemplary documentation process as utilized by a documentation file generator in analyzing a parse tree and generating user documentation;
FIG. 4 is an illustrative command documentation file for the command specified in FIGS. 2a through 2d; and
FIG. 5 is an illustrative report documentation file for a report generated by the command specified in FIGS. 2a through 2d.

### DETAILED DESCRIPTION

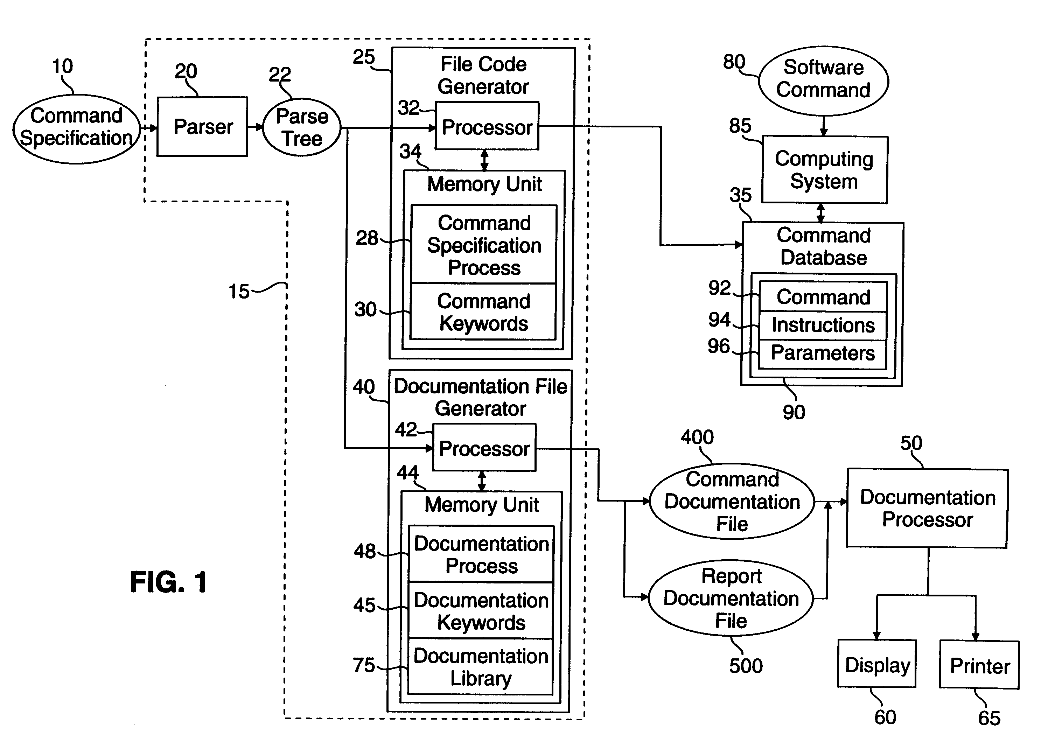

An integrated software command specification and documentation system according to the present invention is illustrated in FIG. 1. The integrated software command specification and documentation system disclosed herein is a software generation system (SGS) based software development tool. The software generation system may be embodied as a compiler or a similar system capable of translating command specifications into a machine readable format.

As is well-known, a process or a series of computer instructions to be performed by a computing system 85 may be initiated by a user at run-time by entering a software command 80 that is associated with the desired process or series of instructions. As discussed further below, the computing system 85 knows how to interpret the entered software command 80 based on a command specification 10 that has been previously processed by a compiler 15 at compile time. The software command 80 may be entered by a user into the computing system 85 by, for example, entering an alphanumeric label from a keyboard, depressing a function key on a keyboard, or selecting an icon using a graphical user interface.

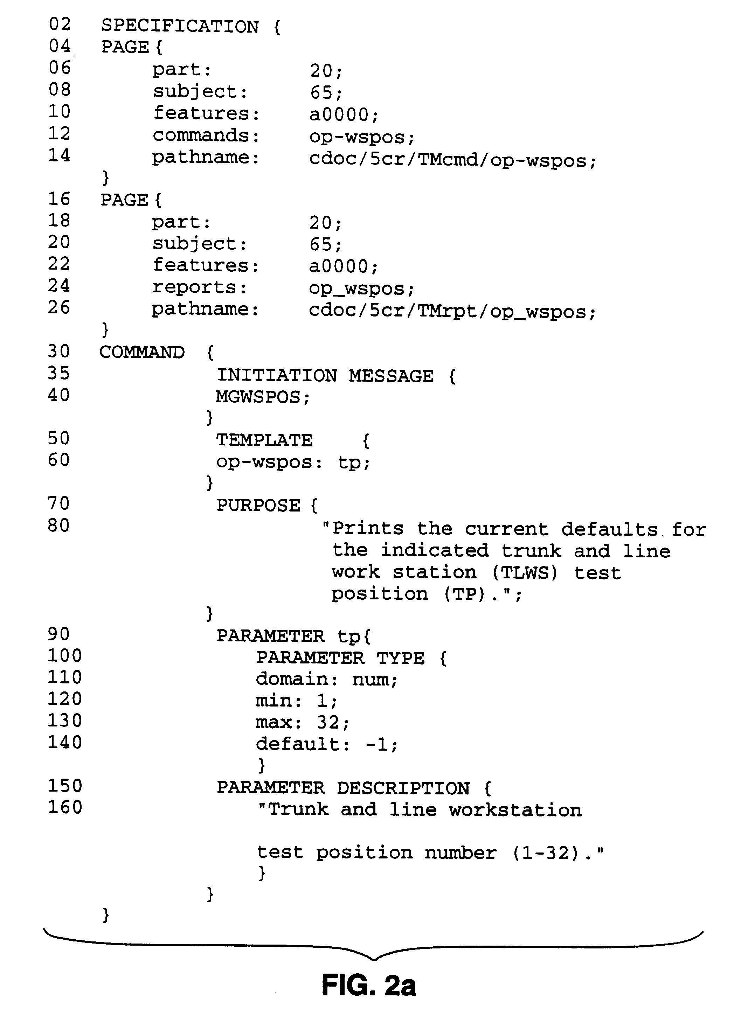

An illustrative command specification, such as the command specification 10, is discussed below, in conjunction with FIGS. 2a through 2d. Typically, the command specification 10 is written in a high level language that is then translated into a computer readable form by a compiler, such as the compiler 15, as shown in FIG. 1. As discussed further below, the compiler 15 will analyze the command specification 10 at compile time and establish an entry 90 in a command data base 35 for each specified command.

As discussed further below, the entry 90 in the command data base 35 for each software command 80 will typically identify the associated command and set forth the series of computer instructions that should be performed by the computing system 85 upon entry of the command 80 into the computing system 85 at run-time. Alternatively, the entry 90 can identify the process or series of computer instructions that should be performed by the computing system 85 by storing an indication of where the desired process or series of computer instructions is stored, such as a software file or other memory location. In addition, the entry 90 will typically include information about any parameters that may be required to execute the command 80. In this manner, when a software command 80 is entered by a user into the computing system 85 at run-time, the appropriate entry 90 in the command data base 35 may be accessed by the computing system 85 in order to properly execute the appropriate process or series of computer instructions.

The computing system 85 may be embodied as any programmed digital data processor capable of receiving command inputs from a user and executing an associated process or series of computer instructions, such as a general purpose computer executing applications software or a dedicated program controlled processor, such as a telecommunications switch.

As shown in FIG. 1, the integrated software specification and documentation system preferably employs a compiler 15, as modified herein to provide documentation generation facilities. A command specification 10 is received by the compiler 15 from an input medium, such as a computing system having programming tools or, alternatively, from a storage medium.

The command specification 10 is analyzed at compile time by a parser 20 which converts the command specification 10 into a parse, which may take any one of a number of well-known forms, such as a parse tree 22. The operations of the parser 20, and the hierarchical relationship of the resultant parse tree 22, are well known to those skilled in the art. Generally, a compiler, such as the compiler 15, parses the command specification and analyzes the parse tree 22 by referencing a stored list of keywords and associated rules that must be performed upon recognition of a keyword in the parse tree 22.

A file code generator 25 preferably consists of a processor 32 and a memory unit 34. As is well-known, a command specification process 28, stored in the memory unit 34, is executed by the processor 32 to analyze the parse tree 22 by searching for predefined command keywords in the parse tree 22. The list of predefined command keywords are stored in a command keyword data base 30, which may be an independent database in the memory unit 34, as shown in FIG. 1, or embedded in the code for the command specification process 28. For each predefined command keyword, the command keyword data base 30 stores an associated rule that must be performed by the command specification process 28 upon recognition of the command keyword and associated data in the parse tree 22.

Typically, the command specification process 28 will search the parse tree 22 for command keywords associated with the specification information that is necessary to populate the entry 90 in the command data base 35 for the respective command 80. As previously indicated, each entry 90 in the command data base 35 preferably includes a cell 92 that identifies the associated command and a cell 94 that sets forth the series of computer instructions that should be performed by the computing system 85 upon entry of the command into the computing system at run-time. Alternatively, the cell 94 can identify the process or series of computer instructions that should be performed by the computing system 85 by storing an indication of where the desired process or series of computer instructions is stored. In addition, the entry 90 will preferably include a cell 96 that will typically include information about any parameters that may be required to execute the command 80, such as the parameter type, and the valid range of the parameter values.

In order for a software command to be effectively utilized by a user, the command must be properly documented. Typically, the user documentation associated with a command, hereinafter referred to as command documentation, includes a description of the purpose of the command, as well as a description of how to use the command. The description of how to use the command preferably includes a description of the parameters associated with the command.

According to one feature of the invention, the command documentation for a given command can be automatically generated by placing the necessary documentation information directly in the associated command specification together with one or more predefined documentation keywords, as described below.

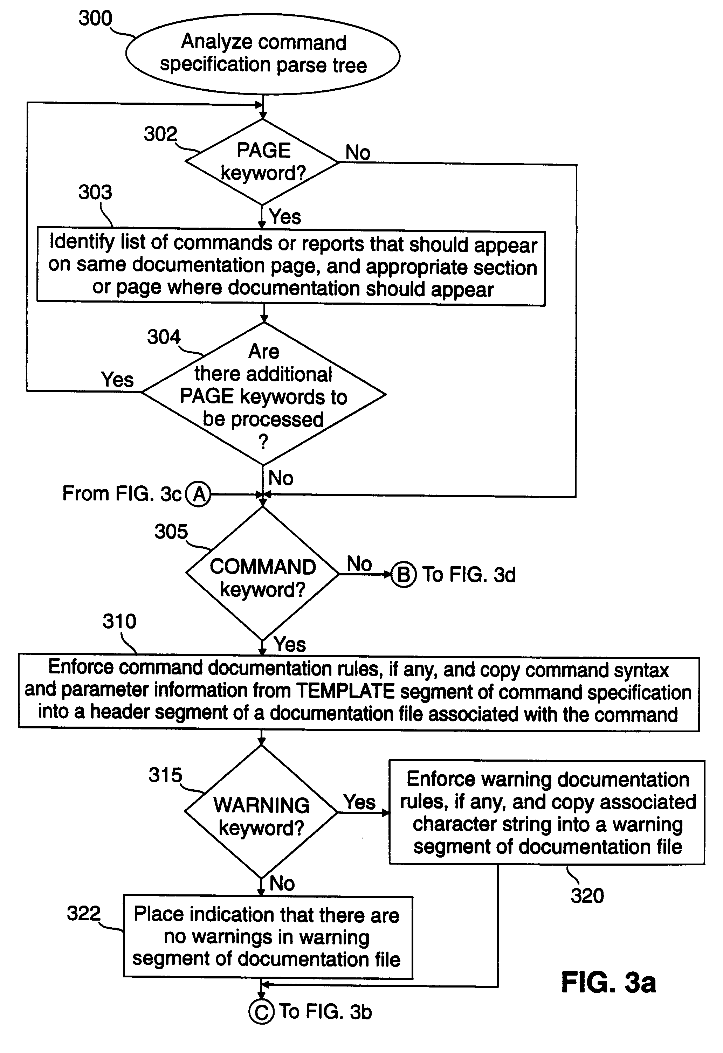

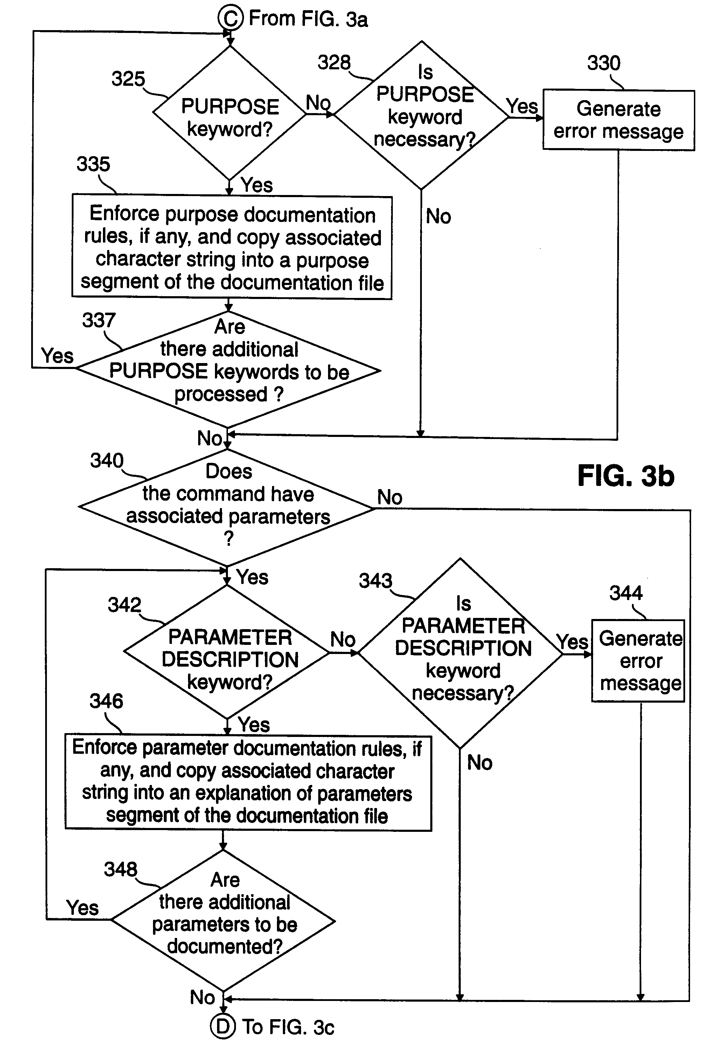

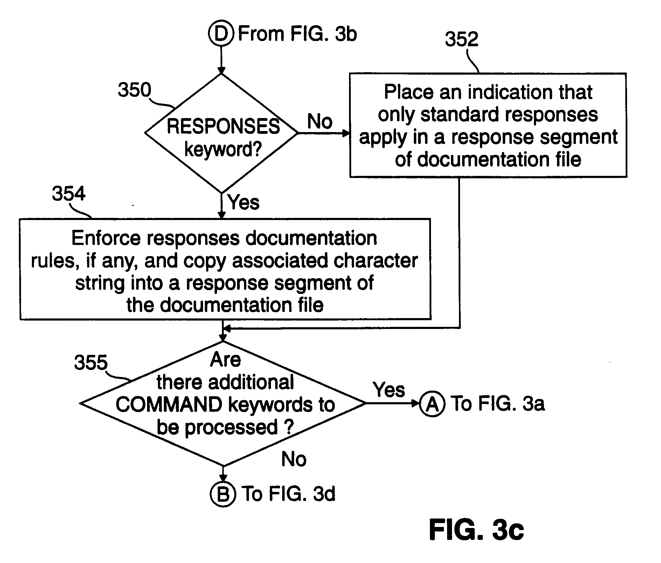

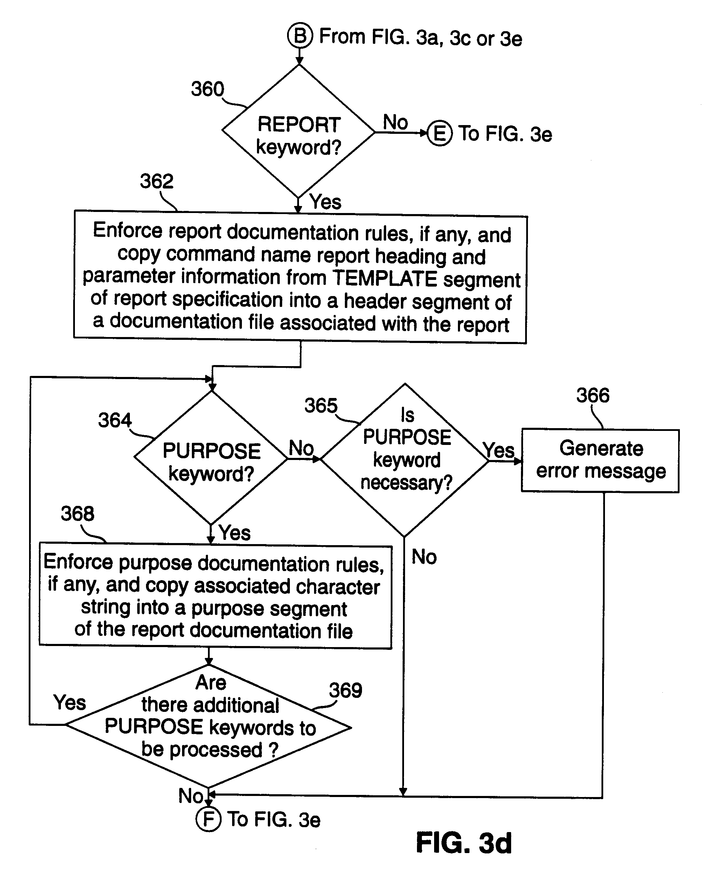

A documentation file generator 40 preferably consists of a processor 42 and a memory unit 44. The memory unit 44 stores a documentation process 48, discussed below in conjunction with FIGS. 3a through 3e, that is executed by the processor 42 to identify and analyze the documentation information that appears in the parse tree 22. Preferably, the list of predefined documentation keywords and associated rules are stored in a documentation keyword data base 45, which may be an independent data base in the memory unit 44, as shown in FIG. 1, or embedded in the code for the documentation process 48.

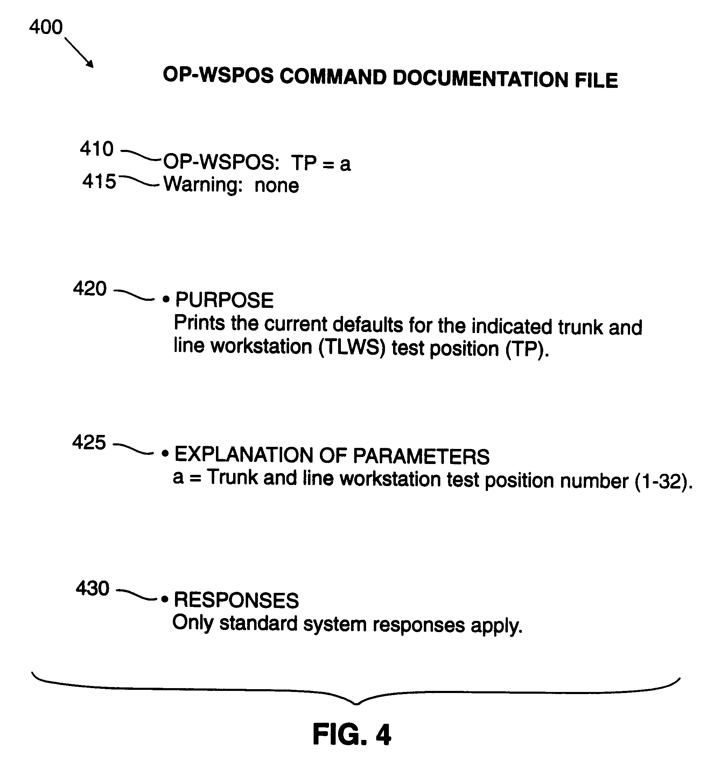

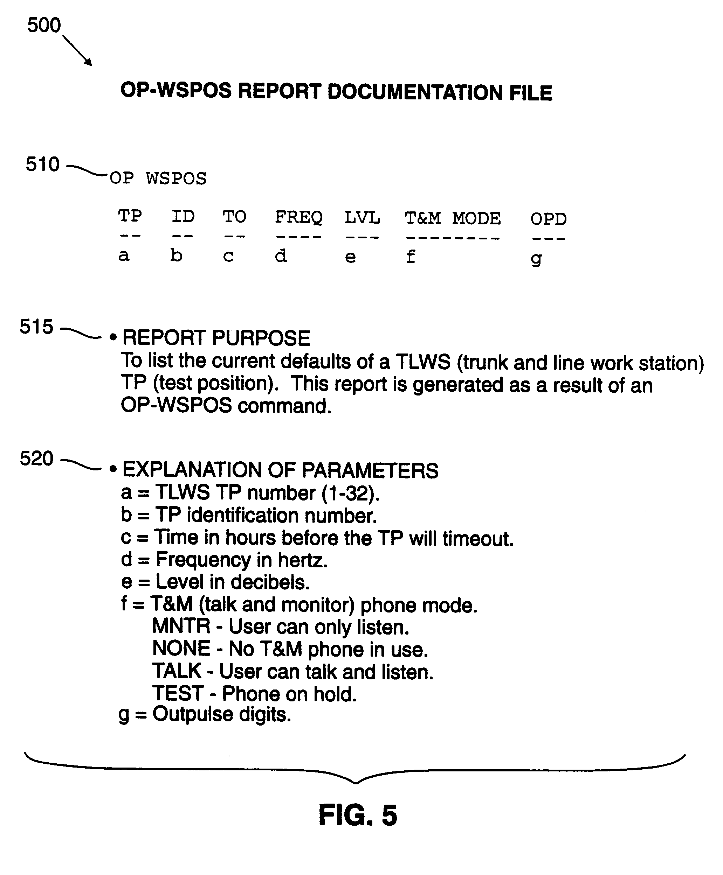

As discussed further below, the documentation process 48 will search.the parse tree 22 in order to identify documentation keywords and to extract the associated documentation information. If the documentation process 48 identifies a documentation keyword in the parse tree 22, the appropriate rule associated with the documentation keyword will be performed by the documentation process 48 on the data that has been placed with the associated documentation keyword in the respective node of the parse tree 22. In addition, as discussed further below, the documentation process 48 may implement rules requiring a certain portion of the source code to include documentation information thereby ensuring the consistency and completeness of the documentation. In a preferred embodiment, the documentation file generator 40 will place the documentation information that has been identified in the parse tree 22 in a command documentation file 400 or a report documentation file 500, as discussed further below in conjunction with FIGS. 4 and 5.

In a preferred embodiment, a documentation library 75, which may be embodied as a software file stored in the memory unit 44, is provided to store parameter definitions or other information that may be needed by a plurality of command specifications. Thereafter, the command specification for each command that utilizes the parameter or other information will reference the more detailed information that is stored in the documentation library 75. In this manner, the effort needed to subsequently define or modify the parameter for each command is reduced and the consistency of the parameter definition for each command is ensured.

It is to be understood that although the file code generator 25 and the documentation file generator 40 of the compiler 15 have been illustrated as employing two independent processors 32, 42 and two independent memory units 34, 44, a single integrated processor or associated memory unit could be employed to implement the command specification process 28 and the documentation process 48, as would be apparent to one skilled in the art. In addition, since there may be some overlap of the command keywords and the documentation keywords, as discussed further below, the command keywords and documentation keywords, as well as the associated rules, may be stored in a single data base, that may be accessed by both the command specification process 28 and the documentation process 48. Furthermore, it is noted that the documentation library 75 may be part of a broader library specification that may also include additional command specification information.

A documentation processor 50 is preferably provided to process the command and report documentation files 400, 500, respectively, generated by the documentation file generator 40 in order to generate formatted pages for a user documentation manual. Preferably, the documentation processor 50 will generate user documentation manuals that conform to a style guide or another body of rules that govern the layout and content of the documentation information. The documentation processor 50 preferably presents the user documentation to a user by means of a display 60 or a hard copy generated by a printer 65.

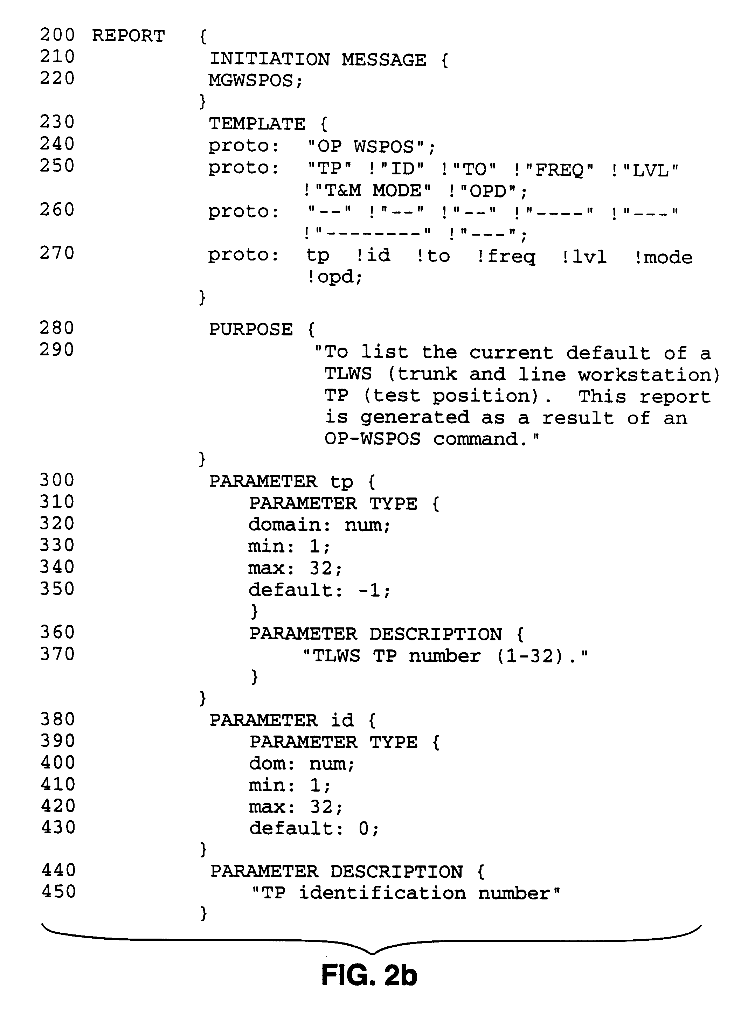

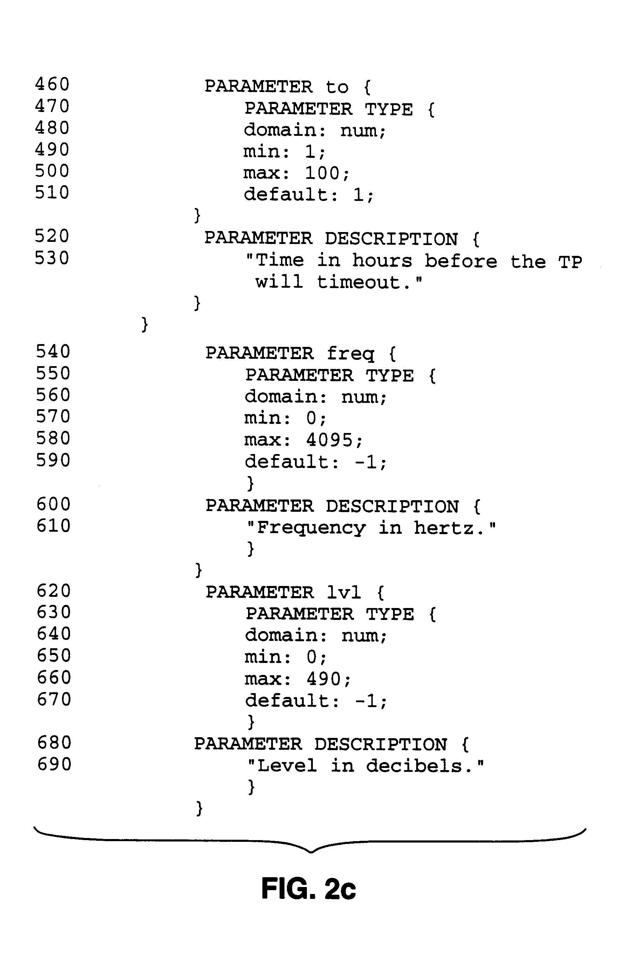

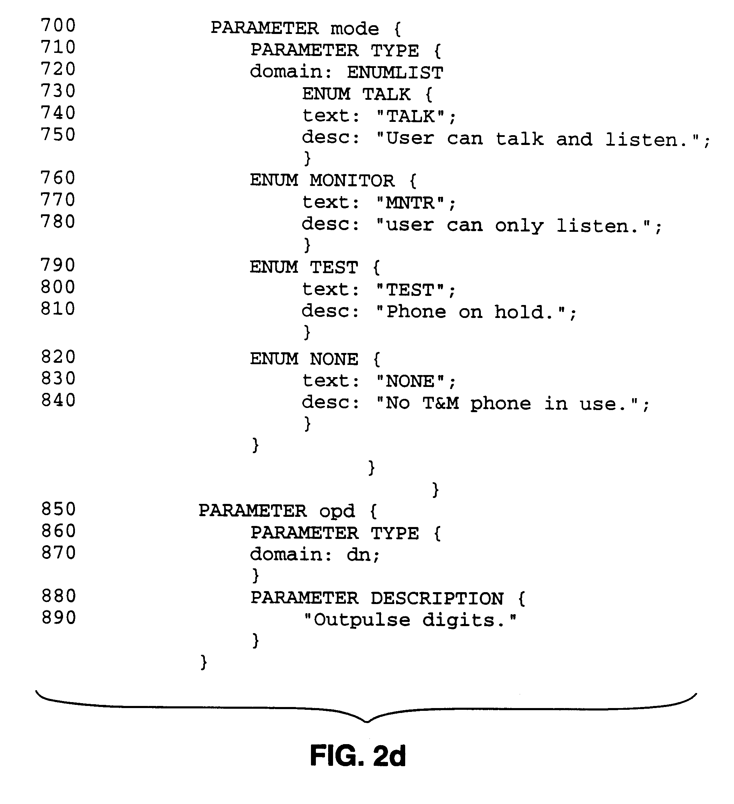

In the embodiment discussed herein in conjunction with FIGS. 2 through 5, the documentation keyword data base 45 includes the following illustrative documentation keywords, discussed further below: PURPOSE, PARAMETER DESCRIPTION, WARNING, PAGE and RESPONSES. As discussed below in conjunction with the documentation process 48, shown in FIGS. 3a through 3e, one or more documentation rules can optionally be defined for each documentation keyword. The documentation rules can allow the associated documentation statements to be reorganized for placement in the user documentation, as well as maintain the consistency and completeness of the user documentation. The list of documentation keywords may be supplemented by adding additional keywords and associated documentation rules to the documentation keyword data base 45, as would be apparent to one skilled in the art.

An illustrative command specification 10 for a command, *op-wspos*, is shown in FIGS. 2a through 2d. The SPECIFICATION keyword in line 02 of FIG. 2a is an indication to the compiler 15 that the software being processed is a specification for a given input command or output report. The PAGE keywords in lines 04 and 16 of FIG. 2a provide a mechanism for allowing a programmer to specify a particular page or section of a documentation manual where the documentation for a particular command or report should appear. For example, a programmer may desire to group the documentation for a number of related commands or reports on a single page.

Thus, lines 04 through 14 specify the PAGE requirements for the *op-wspos* command, and lines 16 through 26 specify the PAGE requirements for the associated *op-wspos* report. The part and subject fields of the PAGE specification, as shown in lines 06 and 18 and lines 08 and 20 of the specification of FIG. 2a, respectively, allow the programmer to specify the chapter and section, respectively, where the documentation information for the current command or report should appear.

In addition, if the command or report indicated in lines 12 and 24, respectively, are particularly relevant to one or more features of a computing system, the programmer may specify this information in the features field, as shown in lines 10 and 22 of the specification of FIG. 2a. The pathname field in lines 14 and 26 indicate where the command and report documentation files for the associated command and report, respectively, are stored. It is noted that if a programmer would like documentation for a plurality of commands or reports to appear on the same documentation page, the information indicated in line 12 and line 24, respectively, can include a list of the desired commands or reports to appear on the same page.

The COMMAND keyword in line 30 is an indication to the compiler 15 that lines 30 through 160 of the specification will define a command. The INITIATION MESSAGE keyword in line 30, together with the entry in line 40, provide a mechanism for associating the command label with the process or series of computer instructions that should be performed by the computing system 85. When the associated software command 80 is entered into the computing system 85 at run-time, the computing system 85 will retrieve the indication from the command data base 35 of how the desired process or series of computer instructions is initiated and thereafter send the appropriate message to execute the associated sequence of instructions. Alternatively, line 40 could list the series of computer instructions that should be performed by the computing system 85 at run-time.

The TEMPLATE keyword in line 50 provides a template for the usage of the command and associated parameters, and indicates to the compiler that the input command and parameters must follow the syntax set forth in line 60, in a known manner. The command name and parameter information that appears in line 60 will typically be placed by the compiler 15 in the command data base 35, as previously indicated. In addition, the TEMPLATE information will be placed in the command documentation file 400, as described below.

The PURPOSE keyword in line 70 is a documentation keyword that will provide an indication to the compiler 15 that the character string that follows in line 80 is a description of the purpose of the command and should appear in the command documentation, as described below.

Lines 90 through 140 of the command specification define the type and range requirements of the numeric command parameter, *tp*, in a known manner. The PARAMETER DESCRIPTION keyword in line 150 is a documentation keyword that indicates to the compiler 15 that the character string that follows in line 160 is a description of the associated command parameter and should appear in the command documentation, as described below. The defined parameter information would typically be placed by the compiler 15 in the command data base 35, as previously indicated.

Very often, when a software command 80, such as the *op-wspos* command specified in FIGS. 2a through 2d, is entered into a computing system 85 at run-time, the computing system 85 will take an action based on the input command 80 and then produce an output, such as a printed or displayed report. In order for the report to be effectively utilized and understood by a user, the report must be properly documented. Typically, the user documentation associated with a report, hereinafter referred to as the report documentation, includes a description of the meaning and format of the report.

As is well-known, when the execution of a command 80 produces an associated report, the command specification 10 will typically include a specification of the associated report, as discussed further below. As shown in FIGS. 2a through 2d, the command specification 10 associated with the *op-wspos* command will include a report specification portion in lines 200 through 890, as indicated by the REPORT keyword in line 200 (FIG. 2b).

The INITIATION MESSAGE keyword in line 210 of the command specification provides a mechanism for associating the report with the message in line 220 that will initiate the generation of the desired report, in a known manner. The message in line 220 will typically be placed by the compiler 15 in the command data base 35.

The TEMPLATE keyword in line 230 indicates to the compiler 15 that lines 240 through 270 of the command specification provide a template for the report format. Lines 240 through 260 provide the report headings, and line 270 indicates the parameter values that should be utilized to populate the report, in a known manner.

The PURPOSE keyword in line 280 of the specification is a documentation keyword that will provide an indication to the compiler 15 that the character string that follows in line 290 is a description of the report, that should appear in the report documentation, as described below.

Lines 300 through 890 of the specification shown in FIGS. 2b through 2d define the type and range requirements of each of the parameters that appear in the *op-wspos* report, in a known manner. The PARAMETER DESCRIPTION keywords in lines 360, 440, 520, 600, 680 and 880 indicate to the compiler 15 that the character strings that follow are descriptions of the report parameters, as described above. Similarly, the parameter mode accepts one of four character string inputs, as set forth in the enumerated list in lines 720 through 840, in a known manner. The DESC keywords below each ENUM keyword, such as in lines 750, 780, 810 and 840, provide an indication to the compiler 15 that the character string that follows is a description of the associated *mode* value.

The documentation process 48 embodying the principles of the present invention, illustrated in FIGS. 3a through 3e, will be entered at step 300 to analyze the command specification parse tree 22. It is to be understood that although the documentation process 48 is discussed below using a set of illustrative command and documentation keywords, other keywords could be utilized without departing from the scope or spirit of the invention, as will be apparent to one skilled in the art from the present discussion of the invention.

A test is performed during step 302 to determine if the command specification parse tree 22 includes a PAGE keyword. The PAGE keyword will preferably allow a programmer to define a particular page or section of a documentation manual where the documentation for a particular command or report should appear. For example, a programmer may desire to group the documentation for a number of related commands and reports on a single page. If it is determined during step 302 that the command specification parse tree 22 does include a PAGE keyword, the documentation process 48 will process the PAGE information and identify during step 303 the list of commands or reports that should appear on the same documentation page, as well as the appropriate page or section where the current documentation should be placed.

A test is then performed during step 304 to determine if there are additional PAGE keywords in the current specification parse tree to be processed. If it is determined during step 304 that there are additional PAGE keywords to be processed, program control will return to step 302 and continue in the manner described above.

If, however, it is determined during step 304 that there are no additional PAGE keywords to be processed, or if it was determined during step 302 that the command specification parse tree 22 does not include any PAGE keywords, then program control will proceed to step 305.

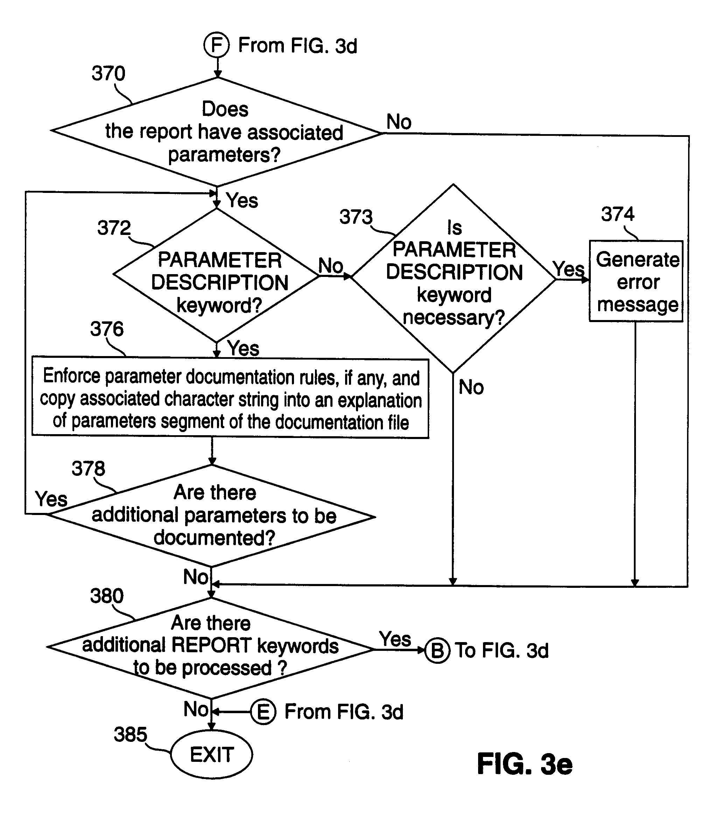

A test is performed during step 305 to determine if the command specification parse tree 22 includes the COMMAND keyword, indicating that a command is being specified. If it is determined during step 305 that the command specification parse tree 22 does not contain the COMMAND keyword, program control will proceed to step 360 (FIG. 3d).

If it is determined during step 305 that the command specification parse tree 22 does contain the COMMAND keyword, the documentation process 48 will enforce any command documentation rules, and then copy the command syntax and parameter information during step 310 from the TEMPLATE segment of the command specification parse tree 22, such as would be associated with line 60 of FIG. 2a, into a header segment 410 of a command documentation file 400, as discussed further below in conjunction with FIG. 4, that is created for storing the documentation information associated with the command. The command documentation file 400 being developed during execution of the documentation process 48 may be stored in the memory unit 44.

A test is performed during step 315 to determine if the command specification parse tree 22 includes a WARNING keyword, which would allow the programmer to provide a warning to a user regarding the initiation of the command. If it is determined during step 315 that the command specification parse tree 22 does include a WARNING keyword, the documentation process 48 will enforce any warning documentation rules that have been defined and then copy the associated character string from the parse tree 22 during step 320 into a warning segment 415 of the command documentation file 400 associated with the command, as discussed further below in conjunction with FIG. 4.

If it is determined during step 315 that the command specification parse tree 22 does not include a WARNING keyword, an indication that there are no warnings is preferably placed in the warning segment 415 of the command documentation file 400 during step 322, as discussed further below in conjunction with FIG. 4. In addition, an error message could also be generated during step 322, as an indication to the person documenting the software that no warnings have been provided for the execution of this command.

A test is performed during step 325 (FIG. 3b) to determine if the command specification parse tree 22 includes a PURPOSE keyword. If it is determined during step 325 that the command specification parse tree 22 does not include a PURPOSE keyword, a test is performed during step 328 to determine if the command specification for the current command should include a PURPOSE keyword and associated documentation information. Under certain circumstances, the purpose documentation information for a given command may be obtained from another location or a default purpose message may be utilized. For example, as discussed above, the documentation for a number of related commands may be grouped on a single page. Accordingly, it may be desired to indicate a single purpose for the group of commands, without indicating the purpose of each individual command.

If it is determined during step 328 that the PURPOSE keyword and associated documentation information is not necessary for this command, program control will proceed to step 340. If, however, it is determined during step 328 that the PURPOSE keyword is necessary for this command, an error or warning message should be generated during step 330, in order to ensure the completeness of the command documentation. Thereafter, program control will proceed to step 340, described below.

If, however, it is determined during step 325 that the command specification parse tree 22 does include a PURPOSE keyword, the documentation process 48 will enforce any purpose documentation rules and then copy the associated character string from the parse tree 22 during step 335 into a purpose segment 420 of the command documentation file 400 associated with the command, as discussed further below in conjunction with FIG. 4.

A test is performed during step 337 to determine if there are additional PURPOSE keywords to be processed for this command. If it is determined during step 337 that there are additional PURPOSE keywords to be processed, program control will return to step 325 and continue in the manner described above.

If, however, it is determined during step 337 that there are no additional PURPOSE keywords to be processed, a test is performed during step 340 to determine if the command has associated parameters, as indicated in the TEMPLATE segment analyzed during step 310. If it is determined during step 340 that the command does not have associated parameters, program control will proceed to step 350 (FIG. 3c), described below.

If, however, it is determined during step 340 that the command does have associated parameters, a test is performed during step 342 to determine if the first defined parameter has a PARAMETER DESCRIPTION keyword. It is noted that if the command specification 10 indicates that the parameter currently being analyzed is an enumerated list, the appropriate keyword identifying the description for each alternative character string will be DESC, such as in lines 750, 780, 810 and 840 of the command specification illustrated in FIG. 2a through 2d.

If it is determined during step 342 that the command specification parse tree 22 does not include a PARAMETER DESCRIPTION keyword for the first defined parameter, a test is performed during step 343 to determine if the command specification parse tree should include a PARAMETER DESCRIPTION keyword for the first defined parameter. Under certain circumstances, the documentation information for a given parameter may be obtained from another location, such as the documentation library 75, or a default parameter description message may be utilized.

If it is determined during step 343 that the PARAMETER DESCRIPTION keyword is not necessary for the first defined parameter, program control will proceed to step 350 (FIG. 3c). If, however, it is determined during step 343 that the PARAMETER DESCRIPTION keyword is necessary for the first defined parameter, an error or warning message should be generated during step 344, in order to ensure the completeness of the command documentation. Thereafter, program control will proceed to step 350 (FIG. 3c), as described below.

If, however, it is determined during step 342 that the command specification parse tree 22 does include a PARAMETER DESCRIPTION keyword for the first defined parameter, the documentation process 48 will enforce any parameter documentation rules and copy the associated character string from the parse tree 22 during step 346 into an explanation of parameter segment 425 of the command documentation file 400 associated with the command, as discussed further below in conjunction with FIG. 4.

A test is performed during step 348 to determine if there are additional parameters to be documented for this command. If it is determined during step 348 that there are additional parameters to be documented, program control will return to step 342 and continue in the manner described above.

If, however, it is determined during step 348 that there are no additional parameters to be documented, a test is performed during step 350 (FIG. 3c) to determine if the command specification parse tree 22 includes a RESPONSES keyword. The RESPONSES keyword will preferably allow a programmer to document the expected system response to the entry of the command, such as an acknowledgement. If it is determined during step 350 that the command specification parse tree 22 does not include a RESPONSES keyword, an indication that only standard system responses apply is preferably placed in a response segment 430 of the command documentation file 400 during step 352, as discussed further below in conjunction with FIG. 4.

If, however, it is determined during step 350 that the command specification parse tree 22 does include a RESPONSES keyword, the documentation process 48 will enforce any responses documentation rules and then copy the associated character string from the parse tree 22 during step 354 into the responses segment 430 of the command documentation file 400 associated with the command, as discussed further below in conjunction with FIG. 4.

A test is performed during step 355 to determine if there are additional COMMAND keywords in the current specification to be processed for this command. If it is determined during step 355 that there are additional COMMAND keywords to be processed, program control will return to step 305 (FIG. 3a) and continue in the manner described above.

If, however, it is determined during step 355 that there are no additional COMMAND keywords to be processed, program control will proceed to step 360 (FIG. 3d).

A test is performed during step 360 (FIG. 3d) to determine if the command specification parse tree 22 includes a REPORT keyword, indicating that a report format is being specified. If it is determined during step 360 that the command specification parse tree 22 does not contain the REPORT keyword, program control will proceed to step 385 (FIG. 3e), where the process will be exited.

If it is determined during step 360 that the command specification parse tree 22 does contain the REPORT keyword, the documentation process 48 will enforce any report documentation rules and then copy the report heading and parameter information from the TEMPLATE segment of the specification parse tree 22, such as associated with lines 240 through 270 of FIG. 2b, into a header segment 510 of a report documentation file 500 that is created for storing the documentation information associated with the report during step 362, as discussed further below in conjunction with FIG. 5. The report documentation file 500 being developed during execution of the documentation process 48 may be stored in the memory unit 44.

A test is performed during step 364 to determine if the command specification parse tree 22 includes a PURPOSE keyword associated with the report specification. If it is determined during step 364 that the specification parse tree 22 does not include a PURPOSE keyword for the report specification, a test is performed during step 365 to determine if the specification for the current report should include a PURPOSE keyword and associated documentation information. Under certain circumstances, the purpose documentation information for a given report may be obtained from another location or a default purpose message may be utilized. For example, as discussed above, the documentation for a number of related reports may be grouped on a single page. Accordingly, it may be desired to indicate a single purpose for the group of reports, without indicating the purpose of each individual report.

If it is determined during step 365 that the PURPOSE keyword is not necessary for this report, program control will proceed to step 370 (FIG. 3e). If, however, it is determined during step 365 that the PURPOSE keyword is necessary for this report, an error or warning message should be generated during step 366, in order to ensure the completeness of the command documentation. Thereafter, program control will proceed to step 370 (FIG. 3e), as described below.

If, however, it is determined during step 364 that the command specification parse tree 22 does include a PURPOSE keyword for the report specification, the documentation process 48 will enforce any purpose documentation rules and then copy the associated character string from the parse tree 22 during step 368 into a purpose segment 515 of the report documentation file 500 associated with the report, as discussed further below in conjunction with FIG. 5.

A test is performed during step 369 to determine if there are additional PURPOSE keywords to be processed for this report. If it is determined during step 369 that there are additional PURPOSE keywords to be processed, program control will return to step 364 and continue in the manner described above.

If, however, it is determined during step 369 that there are no additional PURPOSE keywords to be processed, program control will proceed to step 370 (FIG. 3e).

A test is performed during step 370 (FIG. 3e) to determine if the report has associated parameters, as indicated in the TEMPLATE segment analyzed during step 362. If it is determined during step 370 that the report does not have associated parameters, program control will proceed to step 380, discussed below.

If, however, it is determined during step 370 that the report does have associated parameters, a test is performed during step 372 to determine if the first defined parameter for the report has a PARAMETER DESCRIPTION keyword. It is noted that if the command specification 10 indicates that the parameter currently being analyzed is an enumerated list, the appropriate keyword identifying the description for each alternative character string will be DESC, such as in lines 750, 780, 810 and 840 of the command specification illustrated in FIG. 2a through 2d.

If it is determined during step 372 that the command specification parse tree 22 does not include a PARAMETER DESCRIPTION keyword for the first defined parameter, a test is performed during step 373 to determine if the command specification parse tree should include a PARAMETER DESCRIPTION keyword for the first defined parameter for the report. Under certain circumstances, the documentation information for a given parameter for a report may be obtained from another location, such as the documentation library 75, or a default parameter description message may be utilized.

If it is determined during step 373 that the PARAMETER DESCRIPTION keyword is not necessary for the first defined parameter for the report, program control will proceed to step 380. If, however, it is determined during step 373 that the PARAMETER DESCRIPTION keyword is necessary for the first defined parameter for the report, an error or warning message should be generated during step 374, in order to ensure the completeness of the command documentation. Thereafter, program control will proceed to step 380, as described below.

If, however, it is determined during step 372 that the command specification parse tree 22 does include a PARAMETER DESCRIPTION keyword for the first defined parameter, the documentation process 48 will enforce any parameter documentation rules and then copy the associated character string from the parse tree 22 during step 376 into an explanation of parameter segment 520 of the report documentation file 500 associated with the report, as discussed further below in conjunction with FIG. 5.

A test is performed during step 378 to determine if there are additional parameters to be documented for this report. If it is determined during step 378 that there are additional parameters to be documented, program control will return to step 372 and continue in the manner described above.

If, however, it is determined during step 378 that there are no additional parameters to be documented, a test is performed during step 380 to determine if there are additional REPORT keywords in the current specification to be processed for this report. If it is determined during step 378 that there are additional REPORT keywords to be processed, program control will return to step 360 (FIG. 3d) and continue in the manner described above.

If, however, it is determined during step 378 that there are no additional REPORT keywords to be processed, program control will proceed to step 385, where the process will be exited.

When the documentation process 48 of FIGS. 3a through 3e has been performed on the command specification for the *op-wspos* command, shown in FIGS. 2a through 2d, a command documentation file, such as the command documentation file 400 shown in FIG. 4, will result. As previously indicated, the documentation process will analyze the command specification parse tree 22 to identify certain documentation information that should be extracted from the parse tree 22 and placed in various segments of the command documentation file 400. As shown in FIG. 4, the command documentation file 400 will preferably include a header segment 410, a warning segment 415, a purpose segment 420, an explanation of parameters segment 425 and a response segment 430. In addition, the command documentation file 400 may also include directions to the printer 65, such that when the command documentation file 400 is printed, it will contain certain features, such as a box around the header segment 410 and the warning segment 415.

Similarly, following execution of the documentation process of FIGS. 3a through 3e on the command specification for the *op-wspos* command, shown in FIGS. 2a through 2d, a report documentation file, such as the report documentation file 500 shown in FIG. 5, will result. As previously indicated, the documentation process will analyze the command specification parse tree 22 to identify certain documentation information that should be extracted from the parse tree 22 and placed in various segments of the report documentation file 500. As shown in FIG. 5, the report documentation file 500 will preferably include a header segment 510, a purpose segment 515 and an explanation of parameters segment 520. In addition, the report documentation file 500 may also include directions to the printer 65, such that when the report documentation file 500 is printed, it will contain certain features, such as a box around the header segment 510.

As previously indicated, the documentation files generated by the documentation file generator 40, such as the command documentation file 400 shown in FIG. 4 or the report documentation file 500 shown in FIG. 5, may be formatted in a desired manner by the documentation processor 50.

It is to be understood that the embodiments and variations shown and described herein are illustrative of the principles of this invention only and that various modifications may be implemented by those skilled in the art without departing from the scope of the invention.

## Claims

1. A method for generating user documentation for a software command to be executed by a computing system, said computing system interpreting said software command based on a high level language command specification that includes command specification information identified by one or more command keywords, said high level language command specification being translated into a form that may be executed by said computing system, said user documentation having a plurality of segments, said documentation method comprising the steps of:
defining a plurality of documentation keywords for identifying documentation information statements in said command specification that describe the operation of said software command, each of said documentation keywords being associated with one of said segments of said user documentation;
incorporating into said high level language command specification one or more of said documentation information statements, wherein each of said documentation information statements are identified in said command specification by one of said predefined documentation keywords;
parsing said high level language command specification;
extracting from said parsed command specification said documentation information statements identified by one of said predefined documentation keywords; and
placing said extracted documentation information statements in said segment of said user documentation corresponding to said associated documentation keyword.

2. The documentation method according to claim 1, wherein said execution of said software command by said computing system produces an output result and wherein said command specification includes specification information that defines said output result, and wherein said step of incorporating documentation information statements in said command specification further includes the step of incorporating documentation information statements that describes said output result.

3. The documentation method according to claim 2, wherein at least one of said segments in said user documentation is an output documentation segment, and wherein said documentation information statements describing said output result are placed in said output documentation segment.

4. The documentation method according to claim 1, wherein at least one of said predefined documentation keywords provides an indication that said associated documentation information statement provides a description of the purpose of said software command.

5. The documentation method according to claim 1, wherein said command specification further includes specification information that defines one or more parameters associated with said software command and wherein at least one of said documentation information statements includes a description of said one or more parameters.

6. The documentation method according to claim 5, wherein one or more of said parameter descriptions are stored in a documentation library that may be accessed to generate said user documentation.

7. The documentation method according to claim 1, further including the step of processing said user documentation to generate one or more formatted pages for a user documentation manual.

8. The documentation method according to claim 1, further including the step of ensuring that said command specification includes at least one of said documentation information statements describing the operation of said software command.

9. A method for generating user documentation for a software command to be executed by a computing system, said computing system interpreting said software command based on a high level language command specification that includes command specification information identified by one or more command keywords, said high level language command specification being translated into a form that may be executed by said computing system, said documentation method comprising the steps of:
defining a plurality of documentation keywords for identifying documentation information statements in said command specification that describe the operation of said software command, each of said documentation keywords having at least one associated rule to be performed upon recognition of said associated documentation keyword in said command specification;
incorporating into said high level language command specification one or more of said documentation information statements, wherein each of said documentation information statements are identified in said command specification by one of said predefined documentation keywords;
parsing said high level language command specification;
extracting from said parsed command specification said documentation information statements identified by one of said predefined documentation keywords; and
processing said extracted documentation information statements based on said rule associated with said documentation keyword identifying said documentation information statement.

10. The documentation method according to claim 9, wherein one or more of said rules associated with said documentation keywords require said extracted documentation information statements to be consistent with standards established for said associated documentation keywords.

11. The documentation method according to claim 9, wherein said rules associated with said documentation keywords require documentation information statements to be provided for less than all of said command specification statements.

12. The documentation method according to claim 9, wherein said user documentation includes a plurality of segments and wherein each of said predefined documentation keywords is associated with one of said segments of said user documentation.

13. The documentation method according to claim 12, wherein said processing step further includes the step of placing each of said extracted documentation information statements in said segment of said user documentation corresponding to said associated documentation keyword.

14. The documentation method according to claim 12, wherein said rule associated with each predefined documentation keyword includes an indication of which of said segments of said user documentation where said associated extracted documentation information statement should be placed.
